# EUROPEAN PATENT APPLICATION

(11) **EP 4 844 856 A1**
(43) Date of publication of application: **25.11.2026**
(21) Application number: 24929106.3
(22) Date of filing: 01.08.2024
(51) Int. Cl.: H01M 10/054, H01M 10/058, H01M 50/609

(54) **SODIUM BATTERY, FORMATION METHOD FOR SODIUM BATTERY, AND ELECTRICAL DEVICE**

(30) Priority: 15.03.2024 CN 202410302315
(71) Applicant: Contemporary Amperex Technology Co., Limited, Ningde, Fujian 352100 (CN)
(72) Inventor: LI, Xiao, Ningde, Fujian 352100 (CN); XU, Xiaofu, Ningde, Fujian 352100 (CN); SU, Yiwei, Ningde, Fujian 352100 (CN); YE, Yonghuang, Ningde, Fujian 352100 (CN); JIN, Haizu, Ningde, Fujian 352100 (CN)
(74) Representative: Kraus & Lederer PartGmbB
(86) International application number: PCT/CN2024/109233
(87) International publication number: WO 2025/189653

(57) **Abstract**

A sodium battery, a formation method for the sodium battery, and an electrical device. On the basis of the total volume of gases in a sodium battery casing, the proportion of the total volume of an inert gas is 15%-50%. During a phase after completion of first injection of an electrolyte into the sodium battery and before start of formation of the sodium battery, the inert gas is introduced into the sodium battery casing, such that the sodium battery is subjected to formation in the atmosphere of the gases in the sodium battery casing comprising the inert gas, thus improving the initial coulombic efficiency of the sodium battery.

## Description

### CROSS-REFERENCE

The present application refers to Chinese Patent Application No. 2024103023155 filed on March 15, 2024, and entitled "SODIUM BATTERY, FORMATION METHOD FOR SODIUM BATTERY, AND ELECTRIC DEVICE", which is incorporated herein by reference in its entirety.

### TECHNICAL FIELD

The present application relates to the technical field of secondary batteries, and in particular, to a sodium battery, a formation method for a sodium battery, and an electric device.

### BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, military equipment, and aerospace. With the widespread application of secondary batteries, higher demands have been placed on their cycle performance and service life.

Sodium batteries have the advantages of abundant resources, low cost, and good safety. However, the initial coulombic efficiency of sodium batteries is low, which limits their further application.

### SUMMARY

The present application is made in view of the above issues, and its objective is to provide a sodium battery having high initial coulombic efficiency.

A first aspect of the present application provides a sodium battery. Based on a total volume of gases in a sodium battery housing, a proportion of a total volume of an inert gas is 15% to 50%.

In any embodiment, based on the total volume of the gases in the sodium battery housing, the proportion of the total volume of the inert gas is 30% to 45%.

In any embodiment, the inert gas includes one or more of argon, helium, and nitrogen.

In any embodiment, the sodium battery includes a positive electrode plate, and the positive electrode plate includes a positive electrode current collector and a positive electrode film layer disposed on at least one side of the positive electrode current collector; the positive electrode film layer includes a positive electrode active material, and the positive electrode active material includes a polyanionic compound.

In any embodiment, the polyanionic compound includes one or more of Na₃M₂(PO₄)₃, Na₂XP₂O₇, a mixed polyanionic compound of phosphate and pyrophosphate, where M and X are each independently selected from one or more of Al, Ti, V, Fe, Cr, Mn, Co, Ni, Ca, Mg, Nb, and Zr.

In any embodiment, the polyanionic compound includes at least one of sodium iron pyrophosphate phosphate, sodium vanadium phosphate, and sodium iron pyrophosphate.

In any embodiment, the sodium battery includes a negative electrode-free sodium battery and a sodium metal battery.

A second aspect of the present application provides a formation method for a sodium battery. The method includes the following steps: injecting an electrolytic solution into a sodium battery housing; introducing an inert gas into the sodium battery housing; and performing formation on the sodium battery. After completion of the inert gas introduction and before start of the formation of the sodium battery, a step of evacuating the sodium battery housing is not included.

Research shows that during the first charge, i.e., the formation, of a sodium battery, the active sodium deintercalated from the positive electrode active material is prone to bind with reactive gases such as oxygen and carbon dioxide attached to the surface of the positive electrode active material, resulting in partial loss of the deintercalated active sodium. This reduces the first discharge capacity of the battery, thereby deteriorating the initial coulombic efficiency of the sodium battery. According to the formation method for a sodium battery of the present application, after the completion of the electrolytic solution injection and before the start of the formation of the sodium battery, the inert gas is introduced into the battery housing, such that the formation of the sodium battery is performed in an atmosphere in which the gases in the battery housing include the inert gas. The inert gas in the housing can function to dilute the concentration of the reactive gases adsorbed on the surface of the positive electrode active material and inhibit the binding of the active sodium deintercalated during the formation with the reactive gases, thereby reducing the loss of the active sodium, and thus improving the initial coulombic efficiency of the sodium battery.

In any embodiment, the inert gas includes one or more of argon, helium, and nitrogen.

In any embodiment, an inert gas pressure for introducing the inert gas is 25 kPa to 100 kPa.

The inert gas pressure for introducing the inert gas is within the above range, such that the deformation of the cell caused by excessive pressure of the introduced gas can be avoided while ensuring the production efficiency.

In any embodiment, a time for introducing the inert gas is 2 s to 15 s.

The time for introducing the inert gas is within the above range, such that the sodium battery exhibits good initial coulombic efficiency and production efficiency.

In any embodiment, the inert gas is introduced 1 h to 6 h after completion of the electrolytic solution injection.

After the electrolytic solution is injected into the sodium battery housing, the positive electrode active material of the sodium battery is infiltrated by the electrolytic solution. In the case that the electrolytic solution serves as the medium, the oxygen adsorbed on the surface of the positive electrode active material is prone to oxidize the positive electrode active material, such that the positive electrode active material is converted into a desodiation state, resulting in irreversible loss of the active sodium that may participate in contributing to the capacity. Therefore, the total amount of the active sodium that may be deintercalated from the positive electrode active material is reduced during the formation of the sodium battery, resulting in a decrease in the first charge capacity of the sodium battery, thereby deteriorating the initial coulombic efficiency of the sodium battery. The inert gas is introduced 1 h to 6 h after the completion of the electrolytic solution injection, which can not only enable part of the gas adsorbed on the surface of the positive electrode active material to be discharged automatically after the electrolytic solution injection, but also reduce the reaction between the positive electrode active material and the oxygen adsorbed on the surface of the positive electrode active material under the condition that the electrolytic solution serves as the medium, thereby reducing the loss of the active sodium and improving the initial coulombic efficiency of the sodium battery.

In any embodiment, the sodium battery includes a positive electrode plate, and the positive electrode plate includes a positive electrode current collector and a positive electrode film layer disposed on at least one side of the positive electrode current collector; the positive electrode film layer includes a positive electrode active material, and the positive electrode active material includes a polyanionic compound.

In any embodiment, the polyanionic compound includes one or more of Na₃M₂(PO₄)₃, Na₂XP₂O₇, a mixed polyanionic compound of phosphate and pyrophosphate, where M and X are each independently selected from one or more of Al, Ti, V, Fe, Cr, Mn, Co, Ni, Ca, Mg, Nb, and Zr.

In any embodiment, the polyanionic compound includes at least one of sodium iron pyrophosphate phosphate, sodium vanadium phosphate, and sodium iron pyrophosphate.

After the electrolytic solution is injected into the sodium battery housing, the positive electrode active material is prone to being oxidized by oxygen to a desodiation state under the action of the electrolytic solution serving as the medium, resulting in irreversible loss of the active sodium. In addition, during the first charge, the active sodium deintercalated from the positive electrode active material is prone to bind with the reactive gases, resulting in further irreversible loss of the active sodium, thereby deteriorating the initial coulombic efficiency of the sodium battery. After the first electrolytic solution injection, the inert gas is introduced into the battery housing, and the inert gas in the housing can function to dilute the concentration of the reactive gases adsorbed on the surface of the positive electrode active material and inhibit the related chemical reaction that causes the loss of the active sodium, thereby helping to improve the initial coulombic efficiency of the sodium battery.

In any embodiment, the sodium battery includes a negative electrode-free sodium battery and a sodium metal battery.

After the completion of the first charge of the negative electrode-free sodium battery and the sodium metal battery, the active sodium ions deintercalated from the positive electrode active material are reduced and deposited on the negative electrode into a sodium metal layer. The sodium metal with strong reducibility is prone to react with the oxygen in the sodium battery housing, thereby causing irreversible loss of the active sodium and seriously deteriorating the initial coulombic efficiency of the battery. After the completion of the electrolytic solution injection, the inert gas is introduced into the battery housing, such that the formation of the sodium battery is performed in an atmosphere in which the gases in the battery housing include the inert gas, thereby significantly improving the initial coulombic efficiency of the negative electrode-free sodium battery and the sodium metal battery.

A third aspect of the present application further provides an electric device. The electric device includes the sodium battery according to the first aspect or a sodium battery prepared by the formation method according to the second aspect.

### BRIEF DESCRIPTION OF THE DRAWINGS

FIG. 1 is a schematic view of a sodium battery according to one embodiment of the present application;
FIG. 2 is an exploded view of the sodium battery according to one embodiment of the present application shown in FIG. 1;
FIG. 3 is a schematic view of a battery module according to one embodiment of the present application;
FIG. 4 is a schematic view of a battery pack according to one embodiment of the present application;
FIG. 5 is an exploded view of the battery pack according to one embodiment of the present application shown in FIG. 4; and
FIG. 6 is a schematic view of an electric device using a sodium battery as a power source according to one embodiment of the present application.

### Description of the reference numerals:

1: battery pack; 2: upper case body; 3: lower case body; 4: battery module; 5: sodium battery; 51: housing; 52: electrode assembly; 53: cover plate.

### DETAILED DESCRIPTION

Hereinafter, embodiments of the sodium battery, the formation method for a sodium battery, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Furthermore, the drawings and the following descriptions are provided to enable those skilled in the art to fully understand the present application and are not intended to limit the subject matter recited in the claims.

The "ranges" disclosed in the present application are defined by lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it is understood that ranges of 60 to 110 and 80 to 120 are also anticipated. Furthermore, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present application, unless otherwise specified, the numerical range "a to b" represents an abbreviated representation of any combination of real numbers between a and b, where both a and b are real numbers. For example, the numerical range "0 to 5" indicates that all real numbers within the range of "0 to 5" are listed herein, and "0 to 5" is merely an abbreviated representation of a combination of these numerical values. In addition, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

Sodium batteries have the advantages of low cost, abundant resources, and good safety. However, sodium batteries exhibit low coulombic efficiency during the first cycle of charge and discharge, which affects their further application. The formation process is one of the important processes in the production and manufacturing process of sodium batteries. During the formation of a sodium battery, gases such as oxygen and carbon dioxide present in the housing cause irreversible loss of active sodium provided by the positive electrode active material, resulting in deterioration of the initial coulombic efficiency of the sodium battery.

### [Formation Method for Sodium Battery]

Based on this, the present application provides a formation method for a sodium battery. The method includes the following steps: injecting an electrolytic solution into a sodium battery housing; introducing an inert gas into the sodium battery housing; and performing formation on the sodium battery. After the completion of the inert gas introduction and before the start of the formation of the sodium battery, a step of evacuating the sodium battery housing is not included.

As used herein, the term "sodium battery housing" refers to an outer packaging of an electrode assembly composed of a positive electrode, a negative electrode, and a separator.

In some embodiments, the housing includes a cylindrical housing, a prismatic housing, and a pouch housing.

As used herein, the term "inert gas" refers to a gas that is chemically very stable and difficult to chemically react with other substances.

As used herein, the term "formation" refers to the process of performing the first charge after the assembly of the electrode assembly and the battery housing is completed and the electrolytic solution is injected into the sodium battery housing for the first time.

As used herein, the term "evacuate" refers to removing gas from a container or system such that the gas pressure within the container or system drops to a certain range, thereby achieving a vacuum state.

As used herein, the term "initial coulombic efficiency" refers to the ratio of the first discharge capacity to the first charge capacity of a full cell.

In some embodiments, the inert gas includes one or more of argon, helium, and nitrogen.

Research shows that during the first charge, i.e., the formation, of a sodium battery, the active sodium deintercalated from the positive electrode active material is prone to bind with reactive gases such as oxygen and carbon dioxide attached to the surface of the positive electrode active material, resulting in partial loss of the deintercalated active sodium. This reduces the first discharge capacity of the battery, thereby deteriorating the initial coulombic efficiency of the sodium battery. According to the formation method for a sodium battery of the present application, after the completion of the electrolytic solution injection and before the start of the formation of the sodium battery, the inert gas is introduced into the battery housing, such that the formation of the sodium battery is performed in an atmosphere in which the gases in the battery housing include the inert gas. The inert gas in the housing can function to dilute the concentration of the reactive gases adsorbed on the surface of the positive electrode active material and inhibit the binding of the active sodium deintercalated during the formation with the reactive gases, thereby reducing the loss of the active sodium, and thus improving the initial coulombic efficiency of the sodium battery.

In some embodiments, injecting the electrolytic solution into the sodium battery housing includes: evacuating the sodium battery housing to -5 kPa to 30 kPa, and injecting the electrolytic solution into the sodium battery housing.

After the sodium battery housing is evacuated and before the electrolytic solution is injected, the pressure difference between the inside and outside of the sodium battery housing can be used to drive the electrolytic solution to flow into the housing. However, the reactive gases adsorbed on the surface of the positive electrode active material cannot be removed by evacuation. After the completion of the electrolytic solution injection and before the start of the formation of the sodium battery, the inert gas is introduced into the battery housing, such that the formation of the sodium battery is performed in an atmosphere in which the gases in the battery housing include the inert gas. This can dilute the concentration of the reactive gases and inhibit the reaction between the reactive gases and the active sodium deintercalated from the positive electrode active material during the formation. Compared with evacuation, the introduction of the inert gas into the sodium battery housing can improve the initial coulombic efficiency of the sodium battery.

In some embodiments, an inert gas pressure for introducing the inert gas is 25 kPa to 100 kPa.

In some embodiments, the inert gas pressure for introducing the inert gas is 25 kPa, 40 kPa, 55 kPa, 70 kPa, 85 kPa, 100 kPa, or any value therebetween.

The inert gas pressure for introducing the inert gas is within the above range, such that the deformation of the cell caused by excessive pressure of the introduced gas can be avoided while ensuring the production efficiency.

### In some embodiments, a time for introducing the inert gas is 2 s to 15 s.

In some embodiments, the time for introducing the inert gas is 2 s, 3 s, 4 s, 5 s, 6 s, 7 s, 8 s, 9 s, 10 s, 11 s, 12 s, 13 s, 14 s, 15 s, or any value therebetween.

The time for introducing the inert gas is within the above range, such that the sodium battery exhibits good initial coulombic efficiency and production efficiency.

In some embodiments, the inert gas is introduced 1 h to 6 h after the completion of the electrolytic solution injection.

In some embodiments, the inert gas is introduced 1 h, 2 h, 3 h, 4 h, 5 h, 6 h, or any value therebetween after the completion of the electrolytic solution injection.

After the electrolytic solution is injected into the sodium battery housing, the positive electrode active material of the sodium battery is infiltrated by the electrolytic solution. In the case that the electrolytic solution serves as the medium, the oxygen adsorbed on the surface of the positive electrode active material is prone to oxidize the positive electrode active material, such that the positive electrode active material is converted into a desodiation state, resulting in irreversible loss of the active sodium that may participate in contributing to the capacity. Therefore, the total amount of the active sodium that may be deintercalated from the positive electrode active material is reduced during the formation of the sodium battery, resulting in a decrease in the first charge capacity of the sodium battery, thereby deteriorating the initial coulombic efficiency of the sodium battery. The inert gas is introduced 1 h to 6 h after the completion of the electrolytic solution injection, which can not only enable part of the gas adsorbed on the surface of the positive electrode active material to be discharged automatically after the electrolytic solution injection, but also reduce the reaction between the positive electrode active material and the oxygen adsorbed on the surface of the positive electrode active material under the condition that the electrolytic solution serves as the medium, thereby reducing the loss of the active sodium and improving the initial coulombic efficiency of the sodium battery.

In some embodiments, the formation method for a sodium battery further includes: allowing the sodium battery to stand for 6 h to 36 h.

In some embodiments, the formation method for a sodium battery includes the following steps: injecting an electrolytic solution into a sodium battery housing; allowing the sodium battery to stand for 6 h to 36 h; introducing an inert gas into the sodium battery housing; and performing formation on the sodium battery. After the completion of the inert gas introduction and before the start of the formation of the sodium battery, a step of evacuating the sodium battery housing is not included.

In some embodiments, the formation method for a sodium battery includes the following steps: injecting an electrolytic solution into a sodium battery housing; introducing an inert gas into the sodium battery housing; allowing the sodium battery to stand for 6 h to 36 h; and performing formation on the sodium battery. After the completion of the inert gas introduction and before the start of the formation of the sodium battery, a step of evacuating the sodium battery housing is not included.

After the electrolytic solution is injected into the sodium battery housing for the first time, the sodium battery needs to stand for a long time to allow the electrolytic solution to fully infiltrate the positive electrode plate, the negative electrode plate, and the separator. After the completion of the electrolytic solution injection and before the start of the long-term standing, the inert gas is introduced into the sodium battery housing, which can avoid the reaction between the positive electrode active material and the oxygen adsorbed on the surface of the positive electrode active material under the condition that the electrolytic solution serves as the medium due to the long-term standing, thereby reducing the loss of the active sodium and improving the initial coulombic efficiency of the sodium battery.

In some embodiments, the sodium battery includes a positive electrode plate; the positive electrode plate includes a positive electrode current collector and a positive electrode film layer disposed on at least one side of the positive electrode current collector, and the positive electrode film layer includes a positive electrode active material.

In some embodiments, a positive electrode active material for use in batteries known in the art may be used as the positive electrode active material. As an example, the positive electrode active material may include at least one of the following materials: a Prussian blue analog, a sodium-containing phosphate, a sodium-containing transition metal oxide, and respective modified compounds thereof. However, the present application is not limited to these materials, and other conventional materials that can be used as positive electrode active materials for batteries may also be used. These positive electrode active materials may be used alone or in a combination of two or more. The Prussian blue analog is NaₓP[R(CN)₆]_{δ}·zH₂O, where P and R are each independently selected from at least one of transition metal elements, 0 < x ≤ 2, 0 < δ ≤ 1, and 0 ≤ z ≤ 10; the sodium-containing phosphate is Na_{b}Me_{c}(PO₄)_{d}O₂X, where A is one or more of H, Li, Na, K, and NH₄, Me is one or more of Ti, Cr, Mn, Fe, Co, Ni, V, Cu, and Zn, X is one or more of F, Cl, and Br, 0 < b ≤ 4, 0 < c ≤ 2, and 1 ≤ d ≤ 3; the sodium-containing transition metal oxide is NaₐM_{b}N_{c}Fe_{d}MnₑO₂, where M and N include at least one of Sc, Ti, V, Cr, Co, Ni, Cu, Zn, Zr, Nb, Mo, Sn, Hf, Ta, W, and Pb, 0.05 ≤ b ≤ 0.2, 0.2 ≤ c ≤ 0.3, 0.2 ≤ d ≤ 0.3, 0.3 ≤ e ≤ 0.4, and 0.75 ≤ a/(b + c + d + e) ≤ 1.

In some embodiments, the positive electrode active material includes a polyanionic compound.

As used herein, the term "polyanionic compound" refers to a general term for a series of compounds having a three-dimensional network structure formed by connecting tetrahedral and polyhedral anion structural units through strong covalent bonds.

In some embodiments, the polyanionic compound includes one or more of Na₃M₂(PO₄)₃, Na₂XP₂O₇, a mixed polyanionic compound of phosphate and pyrophosphate, where M and X are each independently selected from one or more of Al, Ti, V, Fe, Cr, Mn, Co, Ni, Ca, Mg, Nb, and Zr.

As used herein, the term "phosphate" refers to PO₄3⁻.

As used herein, the term "pyrophosphate" refers to P₂O₇⁴⁻.

In some embodiments, the polyanionic compound includes at least one of sodium iron pyrophosphate phosphate, sodium vanadium phosphate, and sodium iron pyrophosphate.

The positive electrode active material is prone to being oxidized by oxygen to a desodiation state under the action of the electrolytic solution serving as the medium, resulting in irreversible loss of the active sodium. In addition, during the first charge, the active sodium deintercalated from the positive electrode active material is prone to bind with the reactive gases, resulting in further irreversible loss of the active sodium, thereby deteriorating the initial coulombic efficiency of the sodium battery. After the first electrolytic solution injection, the inert gas is introduced into the battery housing, and the inert gas in the housing can function to dilute the concentration of the reactive gases adsorbed on the surface of the positive electrode active material and inhibit the related chemical reaction that causes the loss of the active sodium, thereby improving the initial coulombic efficiency of the sodium battery.

In some embodiments, the sodium battery includes a negative electrode-free sodium battery and a sodium metal battery.

As used herein, the term "negative electrode-free sodium battery" refers to a battery formed without actively providing a negative electrode active material layer on the negative electrode side during the manufacturing of the battery. For example, during the manufacturing of the battery, a sodium metal or carbonaceous active material layer is not provided at the negative electrode by processes of coating, deposition, or the like to form a negative electrode active material layer. During the first charge, sodium ions gain electrons at the anode side and are deposited as metallic sodium on the surface of the current collector to form a sodium metal phase. During discharge, the metallic sodium can be converted into sodium ions and return to the positive electrode, thus achieving cyclic charge and discharge.

As used herein, the term "sodium metal battery" refers to a secondary battery prepared by depositing sodium metal or an alloy thereof on the negative electrode in advance during the manufacturing of the battery.

After the completion of the first charge of the negative electrode-free sodium battery and the sodium metal battery, the active sodium ions deintercalated from the positive electrode active material are reduced and deposited on the negative electrode into a sodium metal layer. The sodium metal with strong reducibility is prone to react with the oxygen in the sodium battery housing, thereby causing irreversible loss of the active sodium and seriously deteriorating the initial coulombic efficiency of the battery. After the completion of the electrolytic solution injection, the inert gas is introduced into the battery housing, such that the formation of the sodium battery is performed in an atmosphere in which the gases in the battery housing include the inert gas, thereby significantly improving the initial coulombic efficiency of the negative electrode-free sodium battery and the sodium metal battery.

### [Sodium Battery]

The present application further provides a sodium battery. Based on the total volume of gases in the sodium battery housing, the proportion of the total volume of the inert gas in the sodium battery housing is 15% to 50%.

In some embodiments, the inert gas includes one or more of argon, helium, and nitrogen.

In the present application, the proportion of the total volume of the inert gas in the sodium battery housing can be tested using a method known in the art. For example, the test is performed by using gas component analysis - gas chromatography on the test basis of GB/T 9722-2006. Test principle: After being vaporized, the sample and the components thereof to be tested enter the chromatographic column simultaneously along with a carrier gas (usually oxygen), and separation is performed by utilizing differences in the migration speeds of the components formed within the column by differences in the physicochemical properties of the components to be tested, such as adsorption, dissolution, desorption, or resolution, between gas-solid or gas-liquid phases. The separated components sequentially flow out of the chromatographic column and enter the detector, and the chromatographic column and corresponding data are recorded by a data processing system. The retention value of each component and the chromatographic peak area or the corresponding peak height value serve as the basis for qualitative or quantitative determination, respectively. Operation method: The sampling volume is: 1 mL; the split ratio is: 5:1; a TCD (thermal conductivity detector) is adopted. After the instrument is balanced, a gas injection needle is used to extract a quantitative gas from the sodium battery housing, and the gas is injected from the injection port for GC-TCD analysis to obtain the volume proportion of each inert gas; the proportion of the total volume of the inert gas is calculated based on the total volume of the gases in the sodium battery housing.

In some embodiments, based on the total volume of the gases in the sodium battery housing, the proportion of the total volume of the inert gas in the sodium battery housing is 15%, 20%, 25%, 30%, 35%, 40%, 45%, 50%, or any value therebetween.

In any embodiment, based on the total volume of the gases in the sodium battery housing, the proportion of the total volume of the inert gas is 30% to 45%.

In some embodiments, the sodium battery includes a positive electrode plate; the positive electrode plate includes a positive electrode current collector and a positive electrode film layer disposed on at least one side of the positive electrode current collector, and the positive electrode film layer includes a positive electrode active material.

In some embodiments, a positive electrode active material for use in batteries known in the art may be used as the positive electrode active material. As an example, the positive electrode active material may include at least one of the following materials: a Prussian blue analog, a sodium-containing phosphate, a sodium-containing transition metal oxide, and respective modified compounds thereof. However, the present application is not limited to these materials, and other conventional materials that can be used as positive electrode active materials for batteries may also be used. These positive electrode active materials may be used alone or in a combination of two or more. The Prussian blue analog is NaₓP[R(CN)₆]_{δ}·zH₂O, where P and R are each independently selected from at least one of transition metal elements, 0 < x ≤ 2, 0 < δ ≤ 1, and 0 ≤ z ≤ 10; the sodium-containing phosphate is Na_{b}Me_{c}(PO₄)_{d}O₂X, where A is one or more of H, Li, Na, K, and NH₄, Me is one or more of Ti, Cr, Mn, Fe, Co, Ni, V, Cu, and Zn, X is one or more of F, Cl, and Br, 0 < b ≤ 4, 0 < c ≤ 2, and 1 ≤ d ≤ 3; the sodium-containing transition metal oxide is NaₐM_{b}N_{c}Fe_{d}MnₑO₂, where M and N include at least one of Sc, Ti, V, Cr, Co, Ni, Cu, Zn, Zr, Nb, Mo, Sn, Hf, Ta, W, and Pb, 0.05 ≤ b ≤ 0.2, 0.2 ≤ c ≤ 0.3, 0.2 ≤ d ≤ 0.3, 0.3 ≤ e ≤ 0.4, and 0.75 ≤ a/(b + c + d + e) ≤ 1.

In some embodiments, the positive electrode active material includes a polyanionic compound.

In some embodiments, the polyanionic compound includes one or more of Na₃M₂(PO₄)₃, Na₂XP₂O₇, a mixed polyanionic compound of phosphate and pyrophosphate, where M and X are each independently selected from one or more of Al, Ti, V, Fe, Cr, Mn, Co, Ni, Ca, Mg, Nb, and Zr.

In some embodiments, the polyanionic compound includes at least one of sodium iron pyrophosphate phosphate, sodium vanadium phosphate, and sodium iron pyrophosphate.

In some embodiments, the sodium battery includes a negative electrode-free sodium battery and a sodium metal battery.

### [Positive Electrode Plate]

A positive electrode plate generally includes a positive electrode current collector and a positive electrode film layer disposed on at least one surface of the positive electrode current collector, and the positive electrode film layer includes a positive electrode active material.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, an aluminum foil may be used as the metal foil. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene (PP), polyethylene terephthalate (PET), polybutylene terephthalate (PBT), polystyrene (PS), and polyethylene (PE)).

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Negative Electrode Plate]

In some embodiments, the secondary battery is a negative electrode-free battery.

In some embodiments, the negative electrode plate includes a negative electrode current collector.

In some embodiments, in order to improve battery performance, some conventional substances that can be used as negative electrode active materials, such as carbonaceous materials, metal oxides, and alloys, may be provided on the negative electrode side of the negative electrode-free battery. Although these materials have a certain capacity, they are not used as the main negative electrode active material in the battery due to their small amount, and therefore are not considered to form a negative electrode active material layer that plays a role in lithium intercalation or sodium intercalation. The secondary battery thus constructed can still be considered as a negative electrode-free battery.

In some embodiments, the negative electrode plate includes a negative electrode current collector and a negative electrode film layer disposed on at least one surface of the negative electrode current collector. The negative electrode film layer includes a negative electrode active material.

As an example, the negative electrode current collector has two surfaces opposite to each other in its own thickness direction, and the negative electrode film layer may be disposed on any one or both of the two opposite surfaces of the negative electrode current collector.

In some embodiments, a metal foil or a composite current collector may be used as the negative electrode current collector. For example, a copper foil or an aluminum foil may be used as the metal foil. The composite current collector may include a polymer material base layer and a metal layer formed on at least one surface of the polymer material substrate. The composite current collector may be formed by forming a metal material (copper, copper alloy, aluminum, aluminum alloy, nickel, nickel alloy, titanium, titanium alloy, silver, silver alloy, or the like) on a polymer material substrate (such as a substrate made of polypropylene (PP), polyethylene terephthalate (PET), polybutylene terephthalate (PBT), polystyrene (PS), and polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the negative electrode film layer further optionally includes a binder. As an example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

### [Electrolyte]

The electrolyte conducts ions between the positive electrode plate and the negative electrode plate. The present application does not specifically limit the type of electrolyte, which may be selected based on requirements. For example, the electrolyte may be liquid, gel, or all solid.

In some embodiments, the electrolyte is an electrolytic solution. The electrolytic solution includes an electrolyte salt and a solvent.

In some embodiments, the electrolytic solution includes an electrolyte salt selected from at least one of NaPF₆, NaBF₄, NaN(SO₂F)₂(NaFSI), NaClO₄, NaAsF₆, NaB(C₂O₄)₂(NaBOB), NaBF₂(C₂O₄)(NaDFOB), NaN(SO₂RF)₂, and NaN(SO₂F)(SO₂RF), where RF represents C_{b}F_{2b+1}, and b is an integer from 1 to 10, optionally an integer from 1 to 3.

In some embodiments, the electrolyte salt is selected from one or more of NaPF₆, NaN(SO₂F)₂, NaN(CF₃SO₂)₂, NaB(C₂O₄)₂, and NaBF₂(C₂O₄). In some embodiments, the electrolyte salt is selected from one or more of NaPF₆, NaN(SO₂RF)₂, and NaBF₂(C₂O₄). In some embodiments, RF is -CF₃, -C₂F₅, or -CF₂CF₂CF₃.

In some embodiments, the electrolytic solution includes a solvent, and the solvent includes at least one of a chain carbonate, a chain carboxylate, cyclic carbonate, an ether solvent, a sulfone solvent, and a nitrile solvent. In some embodiments, the chain carbonate includes at least one of dimethyl carbonate (DMC), diethyl carbonate (DEC), ethyl methyl carbonate (EMC), methyl propyl carbonate (MPC), methyl isopropyl carbonate (MIPC), methyl butyl carbonate, ethyl propyl carbonate, dipropyl carbonate, and dibutyl carbonate. In some embodiments, the chain carbonate includes at least one of dimethyl carbonate (DMC), diethyl carbonate (DEC), ethyl methyl carbonate (EMC), and methyl propyl carbonate (MPC). In some embodiments, the chain carboxylate includes at least one of methyl formate (MF), ethyl formate (EF), methyl propionate (MP), ethyl propionate (EP), propyl propionate (PP), ethyl butyrate (EB), methyl acetate (MA), ethyl acetate (EA), and propyl acetate (PA). In some embodiments, the chain carboxylate includes at least one of methyl propionate (MP), ethyl propionate (EP), propyl propionate (PP), methyl acetate (MA), ethyl acetate (EA), and propyl acetate (PA). In some embodiments, the ether solvent includes at least one of dioxolane (DOL), tetrahydrofuran (THF), 2-methyl tetrahydrofuran (2Me-THF), tetrahydropyran (THP), 1,2-dimethoxyethane (DME), diethylene glycol dimethyl ether (DG), 1,2-diethoxyethane, and 1,2-dibutoxyethane.

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high- or low-temperature performance of the battery.

### [Separator]

In some embodiments, the secondary battery further includes a separator. The present application does not particularly limit the type of separator, and any porous-structure separator known to have good chemical stability and mechanical stability may be selected.

In some embodiments, the separator may be made of a material selected from at least one of glass fiber, non-woven fabric, polyethylene, polypropylene, and polyvinylidene fluoride. The separator may be a single-layer film or a multi-layer composite film, which is not specified. When the separator is a multi-layer composite film, the materials of the layers may be the same or different, which is not specified.

In some embodiments, the positive electrode plate, the negative electrode plate, and the separator may be manufactured into an electrode assembly through a winding process or a stacking process.

In some embodiments, the secondary battery may include an outer packaging. The outer packaging may be configured to package the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

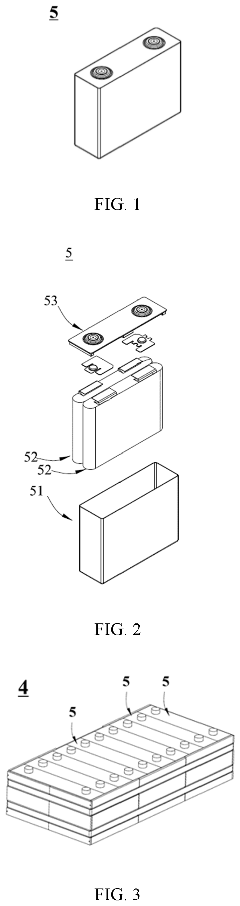

In the present application, the shape of the sodium battery includes, but is not limited to, a cylindrical shape, a prismatic shape, or any other shape. For example, FIG. 1 shows a sodium battery 5 having a prismatic structure as one example.

In some embodiments, referring to FIG. 2, the outer packaging may include a housing 51 and a cover plate 53. The housing 51 may include a bottom plate and side plates connected to the bottom plate, and the bottom plate and the side plates define, in an enclosing manner, an accommodating cavity. The housing 51 is provided with an opening communicating with the accommodating cavity, and the cover plate 53 can be disposed to cover the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated in the electrode assembly 52. The number of the electrode assemblies 52 included in the sodium battery 5 may be one or more, and those skilled in the art can select the number according to specific and actual needs.

In some embodiments, the sodium battery may be assembled into a battery module. The number of sodium batteries included in the battery module may be one or more, and the specific number may be selected by those skilled in the art based on the use and capacity of the battery module.

FIG. 3 shows a battery module 4 as one example. Referring to FIG. 3, in the battery module 4, a plurality of sodium batteries 5 may be sequentially arranged in the length direction of the battery module 4. Certainly, the arrangement may also be in any other manner. Further, the plurality of sodium batteries 5 may be fixed by fasteners.

Optionally, the battery module 4 may further include a shell having an accommodating space in which the plurality of sodium batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

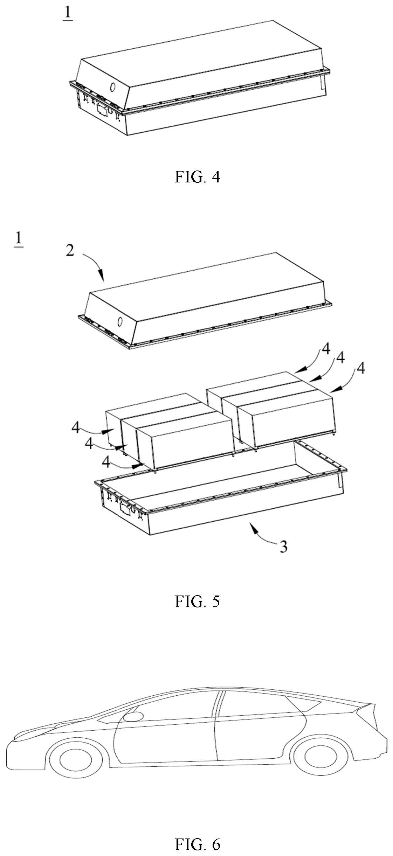

FIGs. 4 and 5 show a battery pack 1 as one example. Referring to FIGs. 4 and 5, the battery pack 1 may include a battery case and a plurality of battery modules 4 disposed in the battery case. The battery case includes an upper case body 2 and a lower case body 3. The upper case body 2 can be disposed to cover the lower case body 3 to form a closed space for accommodating the battery modules 4. The plurality of battery modules 4 may be arranged in any manner in the battery case.

In addition, the present application further provides an electric device. The electric device includes at least one of the sodium battery, the battery module, or the battery pack provided in the present application. The sodium battery, the battery module, or the battery pack may be used as a power source for the electric device, and they may also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like.

For the electric device, a sodium battery, a battery module, or a battery pack may be selected according to usage requirements of the electric device.

FIG. 6 shows an electric device as one example. The electric device is a pure electric vehicle, a hybrid electric vehicle, a plug-in hybrid electric vehicle, or the like. To meet the requirements of the electric device for high power and high energy density of the sodium battery, a battery pack or a battery module may be used.

As another example, the device may be a mobile phone, a tablet computer, a laptop computer, or the like. The device is generally required to be light and thin, and a sodium battery can thus be used as a power source.

### Examples

Hereinafter, examples of the present application are described. The examples described below are illustrative and merely used to explain the present application, and they should not be construed as limiting the present application. Specific techniques or conditions not specified in the examples shall be carried out according to techniques or conditions described in the literature in the art or according to product manuals. Reagents or instruments used herein without specified manufacturers are all commercially available conventional products.

### I. Preparation Method

### Example 1:

### 1) Preparation of negative electrode plate

5 g of sodium carboxymethylcellulose (CMC-Na) was weighed and dissolved in 1000 mL of water with stirring, and then 5 g of single-walled carbon nanotube was added. After ultrasonic dispersion, the mixture was prepared into a slurry. The slurry was applied to a surface of a negative electrode current collector copper foil, and the copper foil was then subjected to drying, slitting, and plate cutting to obtain a negative electrode plate.

### 2) Preparation of positive electrode plate

The positive electrode active material sodium iron pyrophosphate phosphate, the conductive agent carbon nanotube, and the binder metahexafluorophosphoric acid were thoroughly stirred and mixed in an appropriate amount of N-methylpyrrolidone (NMP) according to a mass ratio of 95:2:3 to form a uniform positive electrode slurry. The positive electrode slurry was applied to a surface of a positive electrode current collector aluminum foil, followed by drying, cold pressing, and die cutting to obtain a positive electrode plate with a thickness of 200 µm.

### 3) Preparation of electrolytic solution

In a glove box under argon atmosphere (H₂O content < 10 ppm, O₂ content < 1 ppm), diethylene glycol dimethyl ether and tetrahydrofuran were mixed in a mass ratio of 1:3, and sodium hexafluorophosphate (NaPF₆) was added. After uniform stirring, an electrolytic solution with a NaPF₆ concentration of 1 mol/L was obtained.

### 4) Separator

A porous polymer film made of 9 µm polyethylene (PE) was used as a separator.

### 5) Preparation of sodium battery

The positive electrode plate, the separator, and the negative electrode plate prepared in the above steps were stacked in sequence, such that the separator was located between the positive electrode plate and the negative electrode plate and could isolate the positive electrode plate from the negative electrode plate. Then, the above stacked components were wound to obtain an electrode assembly.

The electrode assembly was disposed in a prismatic housing, shaped by hot pressing, and subjected to a primary helium leak test. After the primary helium leak test was completed, the battery was subjected to baking and drying, and the electrolytic solution prepared above was injected into the sodium battery housing. One hour after the injection was completed, argon with a pressure of 50 kPa was continuously introduced into the housing for 5 s. After being allowed to stand for 24 h, the sodium battery was charged at a constant current of 0.33C to a voltage of 3.65 V at 45 °C in an atmosphere in which the gases in the housing included an inert gas, and then charged at a constant voltage to a current of less than 0.05C to undergo formation with a normal-pressure opening.

After the formation was completed, the battery was subjected to standing and shaping for a capacity test, and discharged at a constant current of 0.33C to a voltage of 1.5 V to obtain the first discharge capacity. The negative electrode-free sodium battery of Example 1 was obtained after the housing was welded using a sealing pin and subjected to processes such as a final helium leak test.

### Examples 2 to 4

The preparation methods for a sodium battery in Examples 2 to 4 were substantially the same as that in Example 1, except that the types of inert gases introduced were different. The inert gas introduced in Example 2 was helium, the inert gas introduced in Example 3 was nitrogen, and the inert gas introduced in Example 4 was a mixed gas of argon, helium, and nitrogen in a volume ratio of 1:1:1. The specific parameters are shown in Table 1.

### Example 5

The preparation method for a sodium battery in Example 5 was substantially the same as that in Example 1, except that the pressure of the introduced argon was 25 kPa. The specific parameters are shown in Table 1.

### Example 6

The preparation method for a sodium battery in Example 6 was substantially the same as that in Example 1, except that the pressure of the introduced argon was 100 kPa. The specific parameters are shown in Table 1.

### Example 7

The preparation method for a sodium battery in Example 7 was substantially the same as that in Example 1, except that the time for continuously introducing the argon was 2 s. The specific parameters are shown in Table 1.

### Example 8

The preparation method for a sodium battery in Example 8 was substantially the same as that in Example 1, except that the time for continuously introducing the argon was 15 s. The specific parameters are shown in Table 1.

### Example 9

The preparation method for a sodium battery in Example 9 was substantially the same as that in Example 1, except that:

the electrolytic solution prepared above was injected into the sodium battery housing; 6 h after the injection was completed, argon with a pressure of 50 kPa was continuously introduced into the housing for 5 s; after being allowed to stand for 12 h, the sodium battery was subjected to formation in an atmosphere in which the gases in the housing included an inert gas.

### Example 10

The preparation method for a sodium battery in Example 10 was substantially the same as that in Example 1, except that:

The electrolytic solution prepared above was injected into the sodium battery housing; 12 h after the injection was completed, argon with a pressure of 50 kPa was continuously introduced into the housing for 5 s; after being allowed to stand for 12 h, the sodium battery was subjected to formation in an atmosphere in which the gases in the housing included an inert gas.

### Example 11

The preparation method for a sodium battery in Example 11 was substantially the same as that in Example 1, except that the battery in Example 11 was a hard carbon negative electrode sodium battery, and the preparation method for a negative electrode plate was as follows:

The negative electrode active material hard carbon, the conductive agent carbon black, and the binder sodium carboxymethylcellulose were thoroughly stirred and uniformly mixed in a deionized water solvent system in a mass ratio of 90:5:5 to obtain a negative electrode slurry. The negative electrode slurry was uniformly applied to a negative electrode current collector copper foil. The copper foil was air-dried at room temperature, transferred to an oven for drying at 120 °C for 1 h, and then subjected to cold pressing and slitting to obtain the negative electrode plate.

### Comparative Example 1

The preparation method for a sodium battery in Comparative Example 1 was substantially the same as that in Example 1, except that no inert gas was introduced into the sodium battery housing at a stage after the completion of the electrolytic solution injection and before the start of the formation of the sodium battery. The specific parameters are shown in Table 1.

### Comparative Example 2

The preparation method for a sodium battery in Comparative Example 2 was substantially the same as that in Example 1, except that before the formation of the sodium battery, the battery housing was evacuated until the pressure was -30 kPa. The specific parameters are shown in Table 1.

### Comparative Example 3

The preparation method for a sodium battery in Comparative Example 3 was substantially the same as that in Example 11, except that no inert gas was introduced at a stage after the completion of the electrolytic solution injection and before the start of the formation of the sodium battery. The specific parameters are shown in Table 2.

### II. Battery Performance Test

### 1. Initial coulombic efficiency test

The initial coulombic efficiency test was performed during the preparation of the sodium batteries in Examples 1 to 11 and Comparative Examples 1 to 3. The charge capacity at the end of the formation was taken as the first charge capacity C1, and the discharge capacity during the capacity test was taken as the first discharge capacity C2. The initial coulombic efficiency of the battery = C2/C1 × 100%.

### III. Analysis of Test Results of Examples and Comparative Examples

The batteries of the examples and comparative examples were prepared according to the methods described above, and various performance parameters were measured. The results are shown in Tables 1 and 2.

**Table 1**

| Serial number | Formation process of sodium battery | | | | Sodium battery | | | | |
|---|---|---|---|---|---|---|---|---|---|
| | Type of introduced gas | Introduction timing | Pressure for introduction /kPa | Time for introduction /s | Negative electrode present or not | Battery housing | | | Battery initial efficiency |
| | | | | | | Volume proportion of argon | Volume proportion of helium | Volume proportion of nitrogen | |
| Example 1 | Argon | 1 h after completion of injection | 50 | 5 | No | 30% | 5% | 0% | 93% |
| Example 2 | Helium | 1 h after completion of injection | 50 | 5 | No | 0% | 30% | 0% | 92.8% |
| Example 3 | Nitrogen | 1 h after completion of injection | 50 | 5 | No | 0% | 5% | 30% | 92.9% |
| Example 4 | Mixed gas of argon, helium, and nitrogen in a volume ratio of 1:1:1 | 1 h after completion of injection | 50 | 5 | No | 10% | 10% | 10% | 92.9% |
| Example 5 | Argon | 1 h after completion of injection | 25 | 5 | No | 15% | 5% | 0% | 92.5% |
| Example 6 | Argon | 1 h after completion of injection | 100 | 5 | No | 40% | 5% | 0% | 93.2% |
| Example 7 | Argon | 1 h after completion of injection | 50 | 2 | No | 20% | 5% | 0% | 92.7% |
| Example 8 | Argon | 1 h after completion of injection | 50 | 15 | No | 45% | 5% | 0% | 93.3% |
| Example 9 | Argon | 6 h after completion of injection | 50 | 5 | No | 20% | 5% | 0% | 92.6% |
| Example 10 | Argon | 12 h after completion of injection | 50 | 5 | No | 10% | 5% | 0% | 92.2% |
| Comparative Example 1 | / | / | / | / | No | 0% | 5% | 0% | 88% |
| Comparative Example 2 | Argon | Introduction was performed 1 h after the completion of injection; and before formation, the housing was evacuated until the pressure was -30 kPa | 50 | 5 | No | 5% | 5% | 0% | 88.5% |

**Table 2**

| Serial number | Formation process of sodium battery | | | | Sodium battery | | | | |
|---|---|---|---|---|---|---|---|---|---|
| | Type of introduced gas | Introduction timing | Pressure for introduction /kPa | Time for introduction /s | Negative electrode present or not | Battery housing | | | Battery initial efficiency |
| | | | | | | Volume proportion of argon | Volume proportion of helium | Volume proportion of nitrogen | |
| Example 11 | Argon | 1 h after completion of injection | 50 | 5 | Hard carbon negative electrode | 30% | 5% | 0% | 85% |
| Comparative Example 3 | / | / | / | / | Hard carbon negative electrode | 0% | 5% | 0% | 83.5% |

As can be seen from Examples 1 to 11, after the electrolytic solution was injected into the sodium battery, the inert gas was introduced into the sodium battery housing. The sodium battery was subjected to formation in an atmosphere in which the gases in the sodium battery housing included the inert gas, and the sodium battery exhibited excellent initial coulombic efficiency.

As can be seen from the comparison between Examples 1 to 10 and Comparative Examples 1 to 2, and between Example 11 and Comparative Example 3, after the electrolytic solution was injected into the sodium battery, the inert gas was introduced into the sodium battery housing, and the sodium battery was subjected to formation in an atmosphere in which the gases in the sodium battery housing included the inert gas, thereby helping to improve the initial efficiency of the sodium battery.

As can be seen from Examples 1 to 4, when the sodium battery was subjected to formation in an atmosphere in which the gases in the sodium battery housing included the inert gas, and the inert gas includes one or more of argon, helium, and nitrogen, the sodium battery exhibited excellent initial efficiency.

As can be seen from Examples 1, 5, and 6, when the pressure of the inert gas introduced into the sodium battery housing was 25 kPa to 100 kPa, the sodium battery exhibited excellent initial efficiency.

As can be seen from Examples 1, 7, and 8, when the time for introducing the inert gas into the sodium battery housing is 2 s to 15 s, the sodium battery exhibited excellent initial efficiency.

As can be seen from Examples 1 and 9, when the inert gas was introduced 1 h to 6 h after the completion of the electrolytic solution injection into the sodium battery, the sodium battery exhibited excellent initial efficiency.

As can be seen from the comparison of Examples 1 and 9 with Example 10, introducing the inert gas 1 h to 6 h after the completion of the electrolytic solution injection into the sodium battery is beneficial to improving the initial efficiency of the sodium battery.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A sodium battery, wherein based on a total volume of gases in a sodium battery housing, a proportion of a total volume of an inert gas is 15% to 50%.

2. The sodium battery according to claim 1, wherein based on the total volume of the gases in the sodium battery housing, the proportion of the total volume of the inert gas is 30% to 45%.

3. The sodium battery according to claim 1 or 2, wherein the inert gas comprises one or more of argon, helium, and nitrogen.

4. The sodium battery according to any one of claims 1 to 3, wherein the sodium battery comprises a positive electrode plate, and the positive electrode plate comprises a positive electrode current collector and a positive electrode film layer disposed on at least one side of the positive electrode current collector; the positive electrode film layer comprises a positive electrode active material, and the positive electrode active material comprises a polyanionic compound.

5. The sodium battery according to claim 4, wherein the polyanionic compound comprises one or more of Na₃M₂(PO₄)₃, Na₂XP₂O₇, and a mixed polyanionic compound of phosphate and pyrophosphate, wherein M and X are each independently selected from one or more of Al, Ti, V, Fe, Cr, Mn, Co, Ni, Ca, Mg, Nb, and Zr.

6. The sodium battery according to claim 5, wherein the polyanionic compound comprises at least one of sodium iron pyrophosphate phosphate, sodium vanadium phosphate, and sodium iron pyrophosphate.

7. The sodium battery according to any one of claims 1 to 6, wherein the sodium battery comprises a negative electrode-free sodium battery and a sodium metal battery.

8. A formation method for a sodium battery, comprising the following steps:
injecting an electrolytic solution into a sodium battery housing;
introducing an inert gas into the sodium battery housing; and
performing formation on the sodium battery;
wherein after completion of the inert gas introduction and before start of the formation of the sodium battery, a step of evacuating the sodium battery housing is not comprised.

9. The formation method according to claim 8, wherein the inert gas comprises one or more of argon, helium, and nitrogen.

10. The formation method according to claim 8 or 9, wherein
an inert gas pressure for introducing the inert gas is 25 kPa to 100 kPa; and/or
a time for introducing the inert gas is 2 s to 15 s.

11. The formation method according to any one of claims 8 to 10, wherein the inert gas is introduced 1 h to 6 h after completion of the electrolytic solution injection.

12. The formation method according to any one of claims 8 to 11, wherein the sodium battery comprises a positive electrode plate, and the positive electrode plate comprises a positive electrode current collector and a positive electrode film layer disposed on at least one side of the positive electrode current collector; the positive electrode film layer comprises a positive electrode active material, and the positive electrode active material comprises a polyanionic compound.

13. The formation method according to claim 12, wherein the polyanionic compound comprises one or more of Na₃M₂(PO₄)₃, Na₂XP₂O₇, and a mixed polyanionic compound of phosphate and pyrophosphate, wherein M and X are each independently selected from one or more of Al, Ti, V, Fe, Cr, Mn, Co, Ni, Ca, Mg, Nb, and Zr.

14. The formation method according to claim 12 or 13, wherein the polyanionic compound comprises at least one of sodium iron pyrophosphate phosphate, sodium vanadium phosphate, and sodium iron pyrophosphate.

15. The formation method according to any one of claims 8 to 14, wherein the sodium battery comprises a negative electrode-free sodium battery and a sodium metal battery.

16. An electric device, comprising the sodium battery according to any one of claims 1 to 7 or a sodium battery prepared by the formation method for a sodium battery according to any one of claims 8 to 15.
